# EUROPÄISCHE PATENTANMELDUNG

(11) **EP 2 216 263 A1**
(43) Veröffentlichungstag der Anmeldung: **11.08.2010**
(21) Anmeldenummer: 09152334.0
(22) Anmeldetag: 06.02.2009
(51) Int. Cl.: B65D 75/14, B65D 85/57, B65D 85/575

(54) **Verpackung aus Faltmaterial**

(71) Anmelder: STI-Gustav Stabernack GmbH, 36341 Lauterbach (DE)
(72) Erfinder: Goldbach, Andreas, 36341 Lauterbach (DE)
(74) Vertreter: Simandi, Claus

(57) **Zusammenfassung**

Die hierin beschriebene und beanspruchte Erfindung betrifft eine Verpackung (10) aus Faltmaterial, die insbesondere zum Versand von Gegenständen geeignet ist. Insbesondere nämlich eine Verpackung aus einem Zuschnitt (12) aus Faltmaterial, die eine Bodenwand (14) aufweist, wobei die Bodenwand (14) durch eine erste Seitenlinie (14a) und eine zweite Seitenlinie (14b) und eine erste Endkante (14c) und eine zweite Endkante (14d) begrenzt wird und an die Bodenwand (14) entlang der ersten Seitenlinie (14a) eine Seitenwand (16) angelenkt ist, wobei an die Seitenwand (16) eine Verschlussklappe (18) angelenkt ist, wobei die Verpackung (10) entlang einer Endkante einen ersten Endbereich (20) aufweist und die Bodenwand (14) im ersten Endbereich (20) einen ersten Verstärkungsstreifen (24) trägt und die Verpackung (10) entlang der anderen Endkante einen zweiten Endbereich aufweist und die Bodenwand (14) im zweiten Endbereich einen zweiten Verstärkungsstreifen (26) trägt und wobei der erste Verstärkungsstreifen (24) aus mindestens einer inneren Lage (42) und einer äußeren Lage (44) des Faltmaterials besteht und wobei der zweite Verstärkungsstreifen (26) aus mindestens einer inneren, der Bodenwand (14) zugewandten, Lage (44) des Faltmaterials besteht, wobei die Verpackung ferner eine erste Schutzklappe (28) und eine zweite Schutzklappe (30) aufweist, so dass ein zu verpackendes Gut auf die Bodenwand (14) gelegt werden kann, durch beide Schutzklappen (28,30) überdeckt werden kann und die Verpackung durch Umlegen der Seitenwand (16) über die Schutzklappen (28,30) und Verbinden der Verschlussklappe (18) mit einem Abschnitt einer der Schutzklappen (32,34) oder einem Abschnitt der Bodenwand verschlossen werden kann, dadurch gekennzeichnet, dass die innere Lage (40) und die äußere Lage (42) des ersten Verstärkungsstreifens (24) und eine Teil des Faltmaterials der Bodenwand (14) z-förmig gefaltet sind und sich an die äußere Lage (32) des ersten Verstärkungsstreifens (24) eine erste Schutzklappe (28) anschließt und sich an die innere Lage (44) des zweiten Verstärkungsstreifens (26) eine zweite Schutzklappe (30) anschließt und sich beide Schutzklappen (28,30) im Bereich einer Überlappungsfläche überlappen.

## Beschreibung

### Gebiet der Erfindung

Die hierin beschriebene und beanspruchte Erfindung betrifft eine Verpackung aus Faltmaterial, die insbesondere zum Versand von Gegenständen geeignet ist. Als Gegenstände kommen unter anderem papierne Unterlagen, Bücher, aber auch Tonträger, beispielsweise CDs, im Einzelfall auch elektronische Geräte in Betracht. Als Faltmaterial kommen unter anderem Papier, Pappe, Wellpappe, aber auch Kunststofffolie oder Leder in Betracht.

### Hintergrund der Erfindung

Der Versandhandel wie auch der Privatmann stehen regelmäßig vor der Aufgabe, eine Vielzahl von Gegenständen für den Versand oder auch die Lagerung gut zu verpacken, wobei die Anzahl vorkonfektionierter Verpackungsgrößen regelmäßig geringer ist als die Anzahl der Gegenstände, die zur Verpackung in Betracht kommen. Gerade im Versandhandel ist der sehr gute Schutz empfindlicher Gegenstände ein wichtiges Anliegen. Retouren dagegen sind in vielfältiger Weise negativ: Der beschädigte Gegenstand ist zu reparieren, häufig sogar zu ersetzen, der Kunde erhält einen wenig guten Eindruck vom Versender und die Abwicklung von Retouren verursacht ernstlichen Verwaltungsaufwand. Jeder Zugewinn an Schutz ist daher willkommen. Nichtsdestotrotz sollte eine Verpackung diesen guten Schutz in ökonomischer Weise anbieten, also insbesondere mit wenig Materialaufwand herzustellen sein. Weiterhin ist es vorteilhaft, einen bestimmten Verpackungstyp aus einer Vielzahl von Materialien herstellen zu können. Dabei kommen dünne, in sich wenig stabile Materialien in Betracht, wie auch dickere, aber dann häufig schwer biegbare Materialien.

Die Patentanmeldung EP 1 724 199 A2 offenbart einen Umschlag für den Versand. Dieser Umschlag kann aus einem blattartigen Zuschnitt hergestellt werden und wird als geeignet für den Versand von CDs beschrieben. Der Umschlag weist eine Verschlussklappe mit einer ersten und einer zweiten Sektion auf. Dieser Umschlag kann durch geeignete Faltung so verwendet werden, dass je nach Faltung ein Hinsendeadressfeld oder ein Rücksendeadressfeld sichtbar wird. Bei der Hinsendung liegen beide Sektionen der Verschlussklappe übereinander, so dass sie dem Versandgut zusätzlichen Schutz gewähren. Bei der Rücksendung jedoch ist dieses nicht der Fall, so dass zumindest während des ebenfalls wichtigen Rücksendeweges der Schutz des Versandguts ein weniger üppiger zu sein scheint.

Das Gebrauchsmuster G 88 02 480.6 offenbart eine Versandhülle, insbesondere für Bücher und Zeitschriften, welche aus Wellpappe hergestellt wird. Diese Versandhülle ist gerade im Hinblick auf den Herstellungsprozess optimiert und soll mit üblichen Faltschachtelklebemaschinen und ohne Einsatz kostenaufwendiger Klebeautomaten herstellbar sein. Vorgesehen sind Schutzklappen, die über ein Zwischenteil mit der Mittelwand oder Bodenwand der Versandtasche verbunden sind. Die Klappen können nach dem Einfalten des Zwischenteils entlang einer Faltkante über das Versandgut geschlagen werden. Diese Lösung scheint allerdings einigen Materialaufwand zu bedeuten. Die gefalteten Zwischenteile sorgen für eine Verstärkung der Versandhülle, die an dieser Stelle mit so viel Materialaufwand nicht unbedingt erforderlich erscheint.

Die vorliegende Erfindung ist also Ergebnis des Strebens, den Stand der Technik zu verbessern und eine sehr universelle, ökonomisch herstellbare und gut schützende Verpackung bereitzustellen.

Dieses wird durch eine Verpackung nach Anspruch 1 erreicht. Die Unteransprüche beschreiben besonders vorteilhafte Gestaltungen der Verpackung.

Erfindungsgemäß wird also eine Verpackung aus einem Zuschnitt aus Faltmaterial zur Verfügung gestellt, die eine Bodenwand aufweist, welche durch eine erste Seitenlinie und eine zweite Seitenlinie und eine erste Endkante und eine zweite Endkante begrenzt wird und an die entlang der ersten Seitenlinie eine Seitenwand angelenkt ist, wobei an die Seitenwand eine Verschlussklappe angelenkt ist, wobei die Verpackung entlang einer Endkante einen ersten Endbereich aufweist und die Bodenwand im ersten Endbereich einen ersten Verstärkungsstreifen trägt und die Verpackung entlang der anderen Endkante einen zweiten Endbereich aufweist und die Bodenwand im zweiten Endbereich einen zweiten Verstärkungsstreifen trägt.

Ein Teil der Verpackung ist im Sinne dieser Erfindung an einen anderen angelenkt, wenn er mit ihm fest verbunden ist. Beispielsweise können angelenkte Teile einstückig ausgeführt sein und durch eine Falz- oder ähnliche Druck oder Schwächungslinie voneinander abgegrenzt sein. Die verschienen Teile können auch aus mehreren Stücken hergestellt und miteinander verbunden, beispielsweise verklebt, sein.

Die Verstärkungsstreifen können gleich, aber auch verschieden gestaltet sein: der erste Verstärkungsstreifen besteht aus mindestens einer inneren Lage und einer äußeren Lage des Faltmaterials und der zweite Verstärkungsstreifen besteht aus mindestens einer inneren Lage des Faltmaterials, die der Bodenwand zugewandt ist.

Die Verpackung weist ferner eine erste Schutzklappe und eine zweite Schutzklappe auf, so dass ein zu verpackendes Gut auf die Bodenwand gelegt werden kann, durch beide Schutzklappen überdeckt werden kann und die Verpackung durch Umlegen der Seitenwand über die Schutzklappen und Verbinden der Verschlussklappe mit einem Abschnitt einer der Schutzklappen oder einem Abschnitt der Bodenwand verschlossen werden kann. Dabei sind die innere Lage und die äußere Lage des ersten Verstärkungsstreifens und ein Teil des Faltmaterials der Bodenwand z-förmig gefaltet und an die äußere Lage des ersten Verstärkungsstreifens schließt sich eine erste Schutzklappe an und an die innere Lage des zweiten Verstärkungsstreifens schließt sich eine zweite Schutzklappe an und beide Schutzklappen überlappen sich im Bereich einer Überlappungsfläche.

Gegenstand der Erfindung ist die Verpackung als solche, welche auch als Verpackungsrohling vorliegen kann, also fertig verklebt und gefaltet, aber noch nicht aufgerichtet und verschlossen. Die Verpackung kann auch schon ein Versandgut enthalten.

Insbesondere kann bei der erfindungsgemäßen Verpackung die innere Lage des ersten Verstärkungssteifens und/oder die innere Lage des zweiten Verstärkungsstreifens mit einem Teil der Bodenwand verklebt sind. Durch diese Verklebungen wird in einfacher Weise ein besonders stabiler und gut verstärkender Verstärkungsstreifen ausgebildet.

Insbesondere können sich bei einer erfindungsgemäßen Verpackung die Verstärkungsstreifen im Wesentlichen über die gesamte Länge der Bodenwand zwischen der ersten Seitenlinie und der zweiten Seitenlinie erstrecken. Eine solche Erstreckung des Verstärkungsstreifens führt zu optimalem Schutz des Verpackungsgutes und führt dazu, dass der Verstärkungsstreifen zu beiden Seiten als Stoßfänger fungieren kann.

Insbesondere können bei einer erfindungsgemäßen Verpackung die Verstärkungsstreifen, gemessen in Richtung der Seitenlinien der Bodenwand, eine Breite von 1 bis 5 cm haben. Diese Breite des Verstärkungsstreifens hat sich für Verpackungsgüter typischer Größe, beispielsweise einer Verpackung für Bücher, als günstiger Kompromiss zwischen Materialkosten und Verstärkungseffekt erwiesen.

Insbesondere kann bei einer erfindungsgemäßen Verpackung die Überlappungsfläche mehr als 50 % der Größe der Fläche der Bodenwand betragen. Während die Bodenwand einstückig und fest ist, und das Gut ganzflächig bedeckt, kann eine einzelne Schutzklappe das Verpackungsgut in der Regel nicht ganzflächig überdecken. Ein vollständiger Schutz des Verpackungsgutes wird erst durch zwei Schutzklappen erzeugt. Die Umhüllung ist umso vollständiger, je größer die Überlappungsfläche ist. Eine nützliche Referenz für die Größe der Überlappungsfläche ist dabei die Fläche der Bodenwand, da die Verpackung typischerweise nach der Größe dieser Fläche ausgewählt wird. Überlappungsflächen, die zwischen 10% und 90% oder zwischen 25% und 75 % oder zwischen 30 und 60 % der Größe der Fläche der Bodenwand betragen, haben sich als günstig erwiesen. Hierbei ist unter der Fläche der Bodenwand die für ein Verpackungsgut verfügbare Fläche zu verstehen, so dass also die Fläche, die durch Verstärkungsstreifen eingenommen wird, abzuziehen ist.

Insbesondere können sich bei einer erfindungsgemäßen Verpackung die Schutzklappen Falzlinien entlang der Richtung der Endkanten aufweisen. Solche Falzlinien erleichtern das Umklappen der Schutzklappen um das Verpackungsgut und erlauben auch ein wenig biegsames Faltmaterial zu verwenden. Sie erlauben insbesondere auch die Ausbildung von Stirnflächenabschnitten.

Insbesondere kann bei einer erfindungsgemäßen Verpackung für mindestens eine Schutzklappen je mindestens eine Fingeraussparung vorgesehen ist. Fingeraussparungen erlauben es, die Schutzklappen anzuheben. Dies ist aller Regel deshalb relevant, weil vor dem Verpacken die Verpackung in einer gefalteten flachen Form vorliegt ("Verpackungsrohling") und die Schutzklappen und die Bodenwand flach aufeinander liegen. Es kann sogar erforderlich sein, beim Anheben der Schutzklappen noch vorhandene Fixierstege der Schnitte zu brechen. Hierbei sind Fingeraussparungen hilfreich. Es ist günstig, wenn Fingeraussparungen an beiden Seitenlinien der Schutzklappen oder zentral in der Mitte zwischen den Seitenlinien der Schutzklappen vorgesehen sind. Solche Positionierungen der Fingeraussparungen erlaubt es Rechtshändern und Linkshändern gleichermaßen, die Verpackung zu handhaben.

Insbesondere kann bei der erfindungsgemäßen Verpackung die Seitenwand einstückig zur Bodenwand ausgebildet sein und durch Falzung angelenkt sein. Auch kann bei der erfindungsgemäßen Verpackung die Verschlussklappe einstückig mit der Seitenwand ausgeführt und durch eine Falzung angelenkt sein. Die einstückige Ausbildung der Seitenwand und/oder der Verschlussklappe erlaubt es, eine Verpackung aus wenigen Einzelteilen, evtl. sogar nur einen einzelnen Zuschnitt, herzustellen.

Insbesondere kann bei der erfindungsgemäßen Verpackung die mindestens eine Schutzklappe Falzlinien aufweisen, die parallel zu den Endkanten der Bodenwand verlaufen und sich in der Nachbarschaft des Endbereichs befinden, mit dem die Schutzklappe verbunden ist.

Insbesondere können bei der erfindungsgemäßen Verpackung an den Seitenlinien der Schutzklappen Arretierlaschen vorgesehen sind. Solche Arretierlaschen erlauben eine einfache Arretierung der Schutzklappen an der jeweils anderen Schutzklappe.

Insbesondere kann eine erfindungsgemäße Verpackung so gestaltet sein, dass die Seitenwand als Deckelteil die Schutzklappen überdeckt und das Verschlussteil auf der Rückseite der Bodenwand befestigt werden kann. Eine solche Seitenwand erlaubt es, das Verpackungsgut fast vollständig zu umschließen und somit gut zu schützen. Gleichzeitig kann eine einfache Seitenwand sowohl die Deckelfläche als auch Stirnwandabschnitt ausbilden.

Insbesondere kann eine erfindungsgemäße Verpackung so gestaltet sein, dass sie aus einem einstückigen Zuschnitt durch Falten und Verkleben herstellbar ist. Der einstückige Zustand kann dabei auch Schnitte (evtl. mit verbliebenen Stegen) oder Ausstanzungen aufweisen. Diese Herstellungsweise ist besonders ökonomisch und stellt somit einen ganz idealen Kompromiss zwischen Schutz des Versandgutes und Einfachheit der Herstellung dar.

### Kurze Beschreibung der Zeichnungen

- Fig. 1: zeigt einen Zuschnitt für eine Verpackung beispielsweise für Dokumente nach dem Stand der Technik.
- Fig. 2: zeigt eine perspektivische Aufsicht auf eine noch unverschlossene Verpackung nach dieser Erfindung.
- Fig. 3: zeigt eine perspektivische Seitenansicht der Verpackung nach Fig. 2.
- Fig. 4: zeigt eine andere perspektivische Seitenansicht der Verpackung nach Fig. 2.
- Fig. 5: zeigt eine perspektivische Ansicht der schon teilweise geschlossenen Verpackung.
- Fig. 6: zeigt in gleicher Ansicht wie Fig. 5 eine andere Ausführung der Verpackung.
- Fig. 7: zeigt einen Zuschnitt der zur Herstellung der Verpackung nach den Fig. 2 bis 5 geeignet ist.
- Fig. 8: zeigt einen Zuschnitt der zur Herstellung einer anderen Ausführung der Verpackung.

### Beschreibung der Erfindung anhand von Ausführungsbeispielen

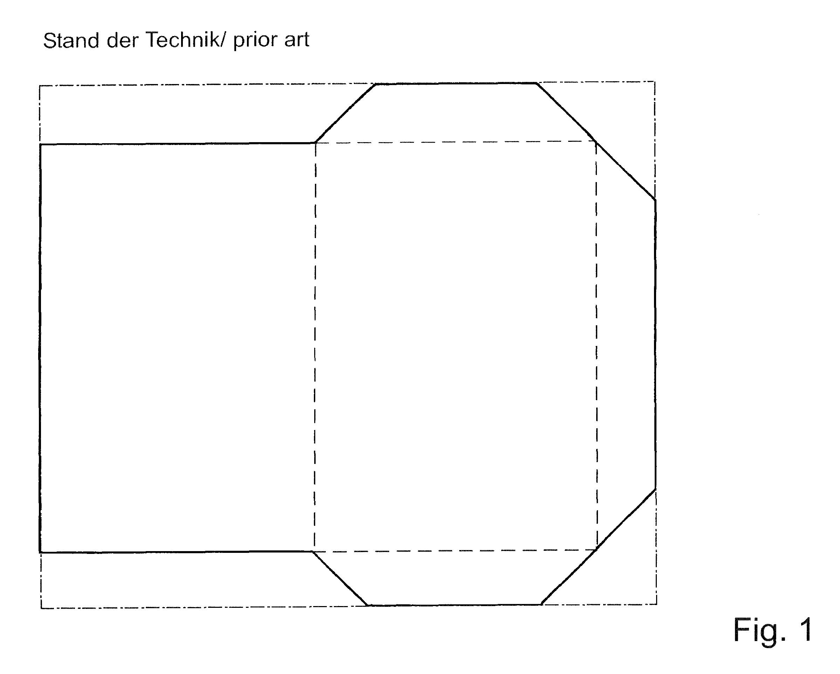

Die Erfindung und ihre Vorteile erschließen sich zunächst besonders gut mit Blick auf den Stand der Technik. Fig. 1 zeigt einen Zuschnitt aus Faltmaterial (etwa aus einer Pappe), welcher für eine Versand- oder Lagerverpackung für Dokumente typisch ist. An eine zentrale Bodenfläche sind Laschen und eine Deckelfläche angelenkt. Die Abbildung zeigt rechts eine Seitenlasche sowie oben und unten Endlaschen. Links ist eine Deckelfläche zu sehen, welche über das durch die Laschen auf der Bodenfläche fixierte Gut gelegt wird. Nicht abgebildet, aber üblich sind Verschlusselemente, die insbesondere aus einer Verschlusslasche mit Klebeelementen oder dergleichen bestehen können.

Die strichpunktierte Linie um den Zuschnitt zeigt, welche Rechtecksfläche von Faltmaterial der Zuschnitt einnimmt. Diese Rechteckfläche ist für den Materialverbrauch bestimmend. Hierzu sei angemerkt, dass viele typischen Faltmaterialien als Rollenware vorliegen und Zuschnitte typischerweise aus Abschnitten erzeugt werden, die durch einen Schnitt senkrecht zur Abrollrichtung einer Rolle von Faltmaterial erzeugt werden. Andere Materialen liegen typischerweise als Rechteckbögen, wie beispielsweise Wellpappe. Daher sind Zuschnitte in aller Regel im Wesentlichen aus rechteckigen Materialabschnitten zu erzeugen. Der Zuschnitt der Fig. 1 lässt somit Abfallstücke entstehen, die sich aus den Flächen innerhalb des strichpunktierten Rechtecks ergeben, welche nicht Teil des Zuschnitts selbst sind. Man erkennt aus der Abbildung deutlich, dass insbesondere die Endlaschen erheblichen Materialaufwand verursachen. Jedoch ist es häufig so, dass das separate Zuschneiden, Handhaben und Verkleben von Endlaschen einen ebenfalls kostspieligen Prozessaufwand bedeutet.

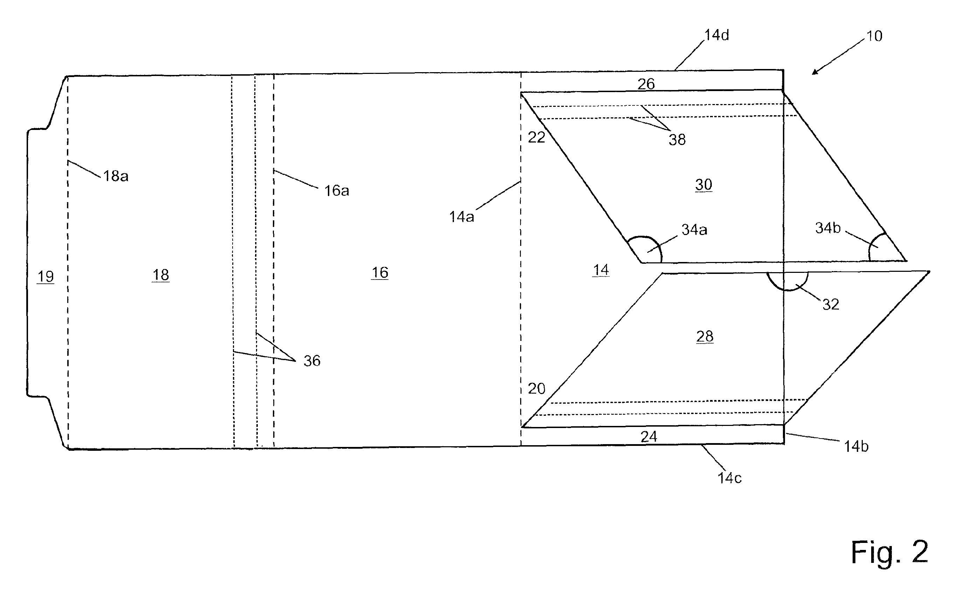

Fig. 2 zeigt nun einen Zuschnitt 12 für eine Verpackung nach der vorliegenden Erfindung. Der Zuschnitt 12 weist eine Bodenwand 14 auf, die durch eine erste Seitenlinie 14a und eine zweite Seitenlinie 14b, sowie eine erste Endkante 14c und eine zweite Endkante 14d begrenzt wird. An die Bodenwand 14 schließt sich entlang der ersten Seitenlinie 14a eine Seitenwand 16 an. Entlang einer Verbindungslinie 16a schließt sich an die Seitenwand eine Verschlussklappe 18 an. An die Verschlussklappe 18 wiederum schließt sich entlang einer Verbindungslinie 18a eine Verschlusslasche 19 an. Die Verpackung 10 und somit auch ihre Bodenwand 14 weisen einen ersten Endbereich 20 und einen zweiten Endbereich 22 auf, wobei der erste Endbereich 20 entlang der ersten Endkante 14c verläuft und durch sie begrenzt wird und der zweite Endbereich 22 entlang der zweiten Endkante 14d verläuft und durch sie begrenzt wird. In den beiden Endbereichen der Bodenwand 14 sind jeweils Verstärkungsstreifen vorgesehen, nämlich ein erster Verstärkungsstreifen 24 im ersten Endbereich 20 und ein zweiter Verstärkungsstreifen 26 im zweiten Endbereich 22. Die Verstärkungsstreifen tragen beide Schutzklappen und zwar geht vom ersten Verstärkungsstreifen 24 eine erste Schutzklappe 28 aus und vom zweiten Verstärkungsstreifen 26 eine zweite Schutzklappe 30.

An der Seitenwand 16 sind Falzlinien 36 angebracht, welche durch gestrichelte Linien wiedergegeben sind, und parallel zur und in der Nachbarschaft der Verbindungslinie 16a verlaufen. Diese Falzungen erlauben das Abknicken der Seitenwand 16 in verschiedener Höhe, entlang der Falzlinien 36. In der Nachbarschaft der Verbindungslinie 16a zwei benachbarte Falzlinien 36 vorzusehen (in einer Ausführungsform zu beiden Seiten der Verbindungslinie), erlaubt es, auch dickes Material bequem umzuknicken.

Weitere Falzlinien 38 sind an den Schutzklappen 28,30 vorgesehen und verlaufen parallel zu den Endkanten. Diese Falzungen erlauben das Abknicken der Schutzklappen 28,30 in verschiedener Höhe entlang der Falzlinien 38.

Es gibt Materialien, die in einer Richtung besser biegbar sind als in einer anderen Richtung. Ein Beispiel für ein solches Material ist Wellpappe. Was nun am Beispiel von Wellpappe erläutert wird, ist entsprechend auf andere Materialien übertragbar. Bei Wellpappe gibt es eine Richtung entlang welcher die Wellen verlaufen. Die Wellenberge und die Wellentäler bestimmen parallele Linien (Wellenlinien). Diese Linien und ihre Parallelen sind als Biegelinien besonders geeignet. In einer Ausführungsform der Erfindung wird das Faltmaterial so verwendet, dass die Wellenlinien parallel zu den Seitenlinien der Bodenwand liegen. Folglich gibt es in der Seitenwand eine Vielzahl von günstigen Biegelinien, welche alle parallel zur Seitenlinie verlaufen. Dies kann bequem zum Biegen der Seitenwand an verschiedenen Stellen genutzt werden. Daher kann in der Seitenwand durchaus auf die Falzlinien 36 verzichtet werden. Bei dieser Verwendung des Faltmaterials ist jedoch eine Biegung in einer Richtung parallel zu den Endkanten erschwert. Eine solche Biegung kommt für die Schutzklappen 28,30 in Betracht. Daher sind bei dieser Verwendung des Materials, die Falzlinien 38 in den Schutzklappen 28,30 besonders von Vorteil. Wird die Wellpappe um 90° gedreht verwendet, wären die Falzlinien 38 in den Schutzklappen möglicherweise verzichtbar. Prinzipiell jedoch kann ein Zuschnitt bei beliebiger Orientierung des Faltmaterials ausgeschnitten werden. Eine Ausrichtung von Biegelinien oder Wellen des Faltmaterials parallel zu den Seitenlinien 14a, 14b ist häufig vorteilhaft.

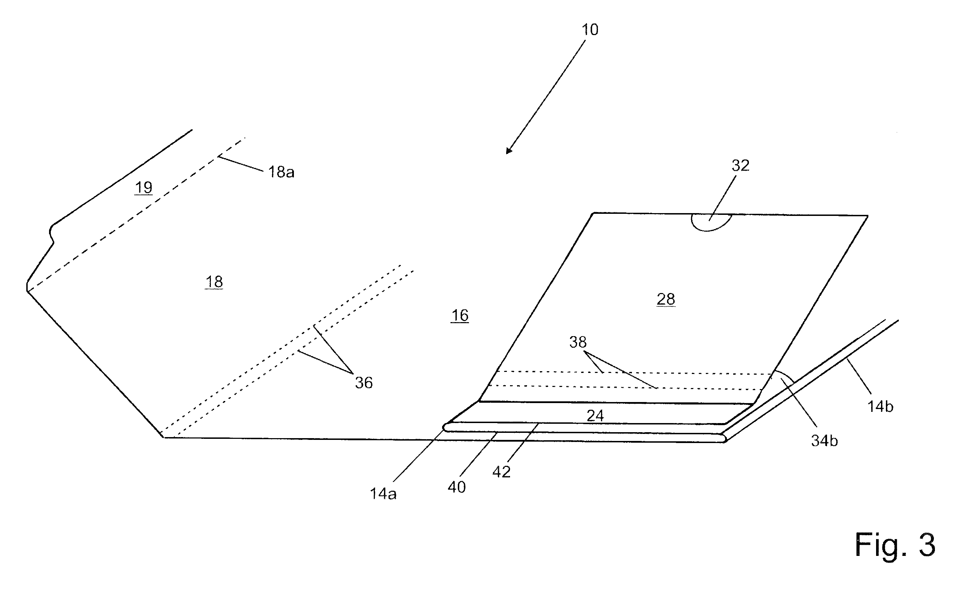

Fig. 3 bietet eine perspektivische Seitenansicht der Verpackung aus Fig. 2. An dieser Abbildung ist die Ausbildung des ersten Verstärkungsstreifens 24 besonders gut zu erkennen. Der erste Verstärkungsstreifen 24 wird aus einer inneren Lage 40 und einer äußeren Lage 42 gebildet. Die innere Lage 40 liegt auf der Bodenwand 14 im ersten Endbereich 20 auf. Die äußere Lage 42 liegt im Wesentlichen vollflächig auf der inneren Lage 40 auf. Der Teil der Bodenplatte 14, der den zweiten Endbereich 22 darstellt, bildet zusammen mit der inneren Lage des Verstärkungsstreifens 40 und der äußeren Lage des Verstärkungsstreifens 42 eine Z-Form aus.

Diese Z-Form kann mit fast allen Materialen hergestellt werden, insbesondere auch mit wenig dehnbaren Materialien. Die innere Lage des Verstärkungsstreifens 40 kann entlang ihrer ganzen Fläche auf die Bodenwand geklebt werden. Ferner kann die äußere Lage 42 des Verstärkungsstreifens entlang ihrer ganzen Fläche auf die darunterliegende innere Lage 40 des Verstärkungsstreifens geklebt werden. Eine solche leicht aufzubringende Klebung führt zu einem sehr stabilen Verstärkungsstreifen. Zusätzlich wird der Verstärkungsstreifen durch die Biegekanten der Z-Faltung und die Bodenwand und stabilisiert. Durch die Bodenwand wird eine Dreilagigkeit erzielt. Diese Dreilagigkeit erlaubt es auch aus besonders dünnen Materialien einen effektiven Verstärkungsstreifen herzustellen.

Der Verstärkungsstreifen dient nicht nur der Verstärkung der Packung gegen Verbiegen, sondern dient auch als Art Stoßfänger. Gerade in den Endbereichen der Bodenwand ist mit Stößen zu rechnen. Vorteilhaft ist dabei, dass die Z-Form sicherstellen kann, dass es auf beiden Seiten des ersten Verstärkungsstreifens 24 eine Biegekante gibt. Eine solche Biegekante ist besonders stabil und stoßunempfindlich. So zeigt Fig. 3 eine Biegekante entlang der zweiten Seitenlinie 14b und eine gegenüberliegende Biegekante entlang der ersten Seitenlinie 14a.

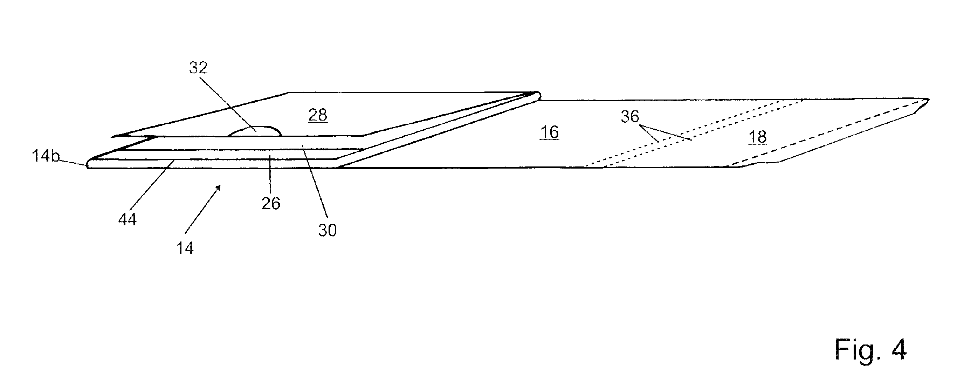

Fig. 4 zeigt eine perspektivische Seitenansicht der Verpackung nach Fig. 2. Die Perspektive ist ähnlich gewählt wie bei Fig. 3. Man erkennt, dass das Faltmaterial, welches die Bodenwand 14 bildet, entlang der zweiten Seitenlinie 14b umgebogen ist und somit den zweiten Verstärkungsstreifen 26 ausbildet. Am Übergang ist jedoch eine Schwächungslinie in der Form einer Falzlinie vorgesehen. Diese erleichtert das Hochklappen der zweiten Schutzklappe 30. In dieser Ausführung ist also der zweite Verstärkungsstreifen zweilagig. Insbesondere, wenn jedoch eine Verklebung zwischen einem Teil der Bodenwand 14 und der darüber liegenden inneren Lage des zweiten Verstärkungsstreifens vorgesehen ist, so erhält man einen hinreichend stabilen zweiten Verstärkungsstreifen 26. In anderen Ausführungsformen kann sich an die innere Lage 44 des zweiten Verstärkungsstreifens zumindest eine weitere Lage anschließen.

Die Verstärkungsstreifen haben des Weiteren die Funktion, eine Art Ankerplatte für die Schutzklappen zu bilden. In der Fig. 3 ist erkennbar, dass die erste Schutzklappe 28 an die äußere Lage 42 des ersten Verstärkungsstreifens 24 angelenkt ist. Durch einen geeigneten Herstellungsprozess ist es möglich, die äußere Lage 42 des Verstärkungsstreifens und die erste Schutzklappe 28 einstückig vorzusehen. Zwischen Verstärkungsstreifen und Schutzklappe kann dann eine Falzung vorgesehen werden, die das Aufklappen der Schutzklappen unterstützt. In Fig. 4 ist entsprechend erkennbar, dass die Lage 44 des zweiten Verstärkungsstreifens 26 einstückig in die zweite Schutzklappe 30 übergeht.

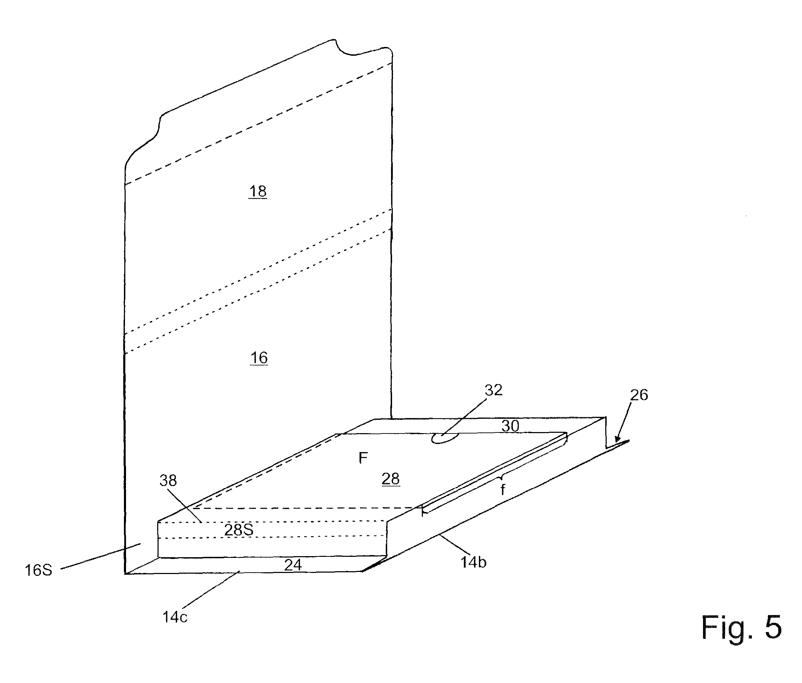

Die Fig. 5 lässt aufbauend auf Fig. 2 den typischen Gebrauch der Verpackung leicht erkennen: Ein Versandgut wird zunächst auf die Bodenwand 14 aufgelegt. Sodann werden die beiden Schutzklappen 28,30 eingeklappt und überdecken das Versandgut. Die Schutzklappen sind so dimensioniert, dass sie einander fast vollflächig überlagern und folglich nach oben hin das Versandgut gut umschlossen und geschützt wird. Eine lange Überlappungsstrecke f und eine große Überlappungsfläche F ergeben einen besonders guten Schutz. Beim Umlegen der Schutzklappen sind die Falzungen 38 hilfreich, da die Schutzklappen so umgeknickt werden können, dass sie in ihrem unteren Teil der sich an die Endbereiche der Bodenwand 14 anschließt Stirnwandabschnitte bilden können, und die übrigen Teile die Oberseite des Versandgutes in der beschriebenen Weise schützen können. Für die erste Schutzklappe 28 ist ein solcher Stirnwandabschnitt 28S sichtbar. In ähnlicher Weise wird die Seitenwand 16 umgeklappt. Wiederum kann die Seitenwand eingeknickt werden (ggf. entlang der Falzungen 36), und dieser untere Teil der Seitenwand 16, der sich an die erste Seitenlinie 14a anschließt, bildet einen gegenüber der Bodenwand aufragenden Teil der Seitenwand, d.h. einen Stirnwandabschnitt 16S. Der sich anschließende Teil der Seitenwand 16 bildet dann eine Deckelfläche. Die Seitenwand ist so dimensioniert, dass der sich dann anschließende und an die Verbindungslinie 16a angrenzende Teil einen Stirnwandabschnitt bilden kann, der bis zur zweiten Seitenlinie 14b reicht. Die Verbindungslinie 16a kann dann ungefähr im Bereich der zweiten Seitenlinie 14b positioniert werden. Dies erlaubt es, die Verschlussklappe 18 auf die Rückseite der Bodenwand 14 aufzulegen. Die Verschlussklappe 18 kann beispielsweise mit der Rückseite der Bodenwand 14 verklebt werden. Hierzu kann die Verschlussklappe 18 mit doppelseitigem Klebeband versehen werden, so dass der Verpackende nur noch einen Schutzstreifen des Klebebandes ablösen muss, um die Verpackung mit nur einer Klebung vollständig zu verschließen. Allgemein sind Klebebefestigungen oder mechanische Befestigungen gut als Verschlussmittel geeignet. Die so verschlossene Verpackung kann leicht an eine Vielzahl verschiedener Versandgüter, insbesondere verschieden dicker Versandgüter angepasst werden durch Anpassung der Höhe der Stirnwandabschnitte. Sie bietet für alle Versandgüter viel Schutz und ist dennoch leicht zu handhaben.

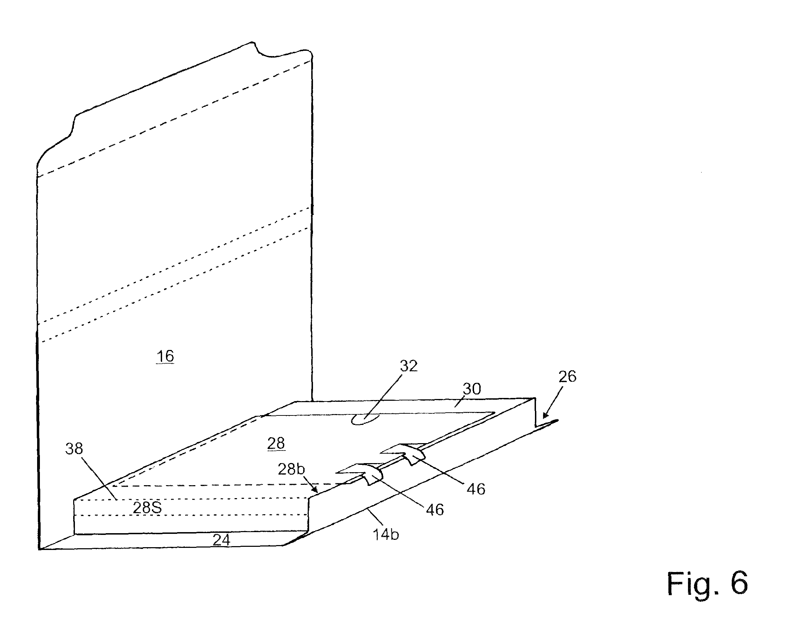

Fig. 6 zeigt eine perspektivische Ansicht der schon teilweise geschlossenen Verpackung, wie sie als Ansicht der Fig. 5 entspricht. Jedoch ist in Fig. 6 eine etwas andere Ausführungsform der Verpackung gezeigt. Bei dieser Ausführungsform sind an den Seitenlinien beider Schutzklappen Arretierlaschen 46 vorgesehen. Solche Laschen lassen sich durch Schnitte senkrecht zu den Seitenlinien erzeugen. Die Arretierlaschen 46 lassen sich beispielsweise, so wie abgebildet, durch vier parallele Schnitte, welche senkrecht zur zweiten Seitenlinie 28b der ersten Schutzklappe verlaufen erzeugen. In der zweiten Schutzklappe 30 lassen sich in gleicher Weise Arretierlaschen 46 vorsehen. Die Arretierlaschen 46 können so angeordnet werden, dass sie beim Verschließen der Verpackung übereinander liegen. Indem mehrere Arretierlaschen 46 vorgesehen werden, ist es möglich, dass bei verschiedener Dicke des zu verpackenden Gutes und somit bei verschiedener Höhe der entsprechenden Stirnwandabschnitte sich jeweils doch immer Laschen der ersten Schutzklappe und Laschen der zweiten Schutzklappe übereinander legen lassen. Übereinander liegende Laschen können dann in folgender Weise als Arretierlaschen dienen: Eine obere Arretierlasche 46 der oben liegenden Schutzklappe, in diesem Fall der ersten Schutzklappe 28, wird nach unten gedrückt. Bei diesem Drücken nach unten (das heißt auf die Bodenwand 14 zu) wird die darunterliegende Arretierlasche 46 mitgenommen. Beide Laschen ragen also übereinanderliegend nach unten. Dabei hakt die obere Arretierlasche 46 in den Ausschnitt ein, welchen die nun ebenfalls nach unten gebogene Arretierlasche der darunterliegenden (zweiten) Schutzklappe lässt. Diese Arretierung erlaubt es, die beiden Schutzklappen miteinander zu verschränken. Somit gibt die Arretierung der Verpackung zusätzliche Stabilität. Das Verschränken der Arretierung kann ohne jedes Werkzeug erfolgen, beispielsweise durch Herunterdrücken der Arretierlaschen 46 mit einem Finger.

In anderen Ausführungsformen sind andere bequeme Arretiermöglichkeiten denkbar. Beispielsweise kann die der Bodenwand zugewandte untere Seite der oberen Schutzklappe 28 ein Klebeband tragen. Dieses Klebeband, welches möglicherweise auch noch mit einer Schutzschicht abgedeckt wird, kann auf die Oberseite der zweiten Schutzklappe 30 geklebt werden. Auch diese Form der klebenden Arretierung stabilisiert die Verpackung zusätzlich.

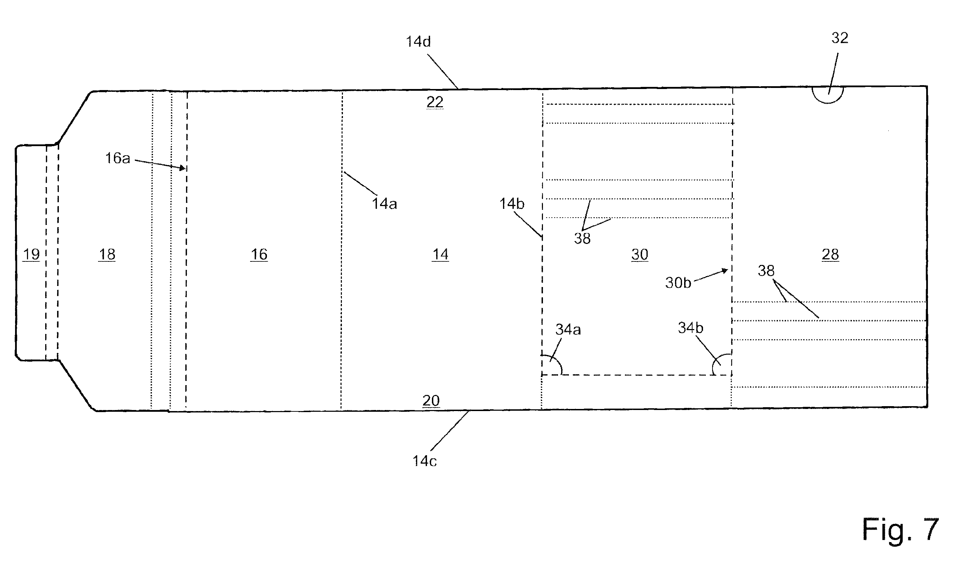

Fig. 7 zeigt einen Zuschnitt aus Faltmaterial, welcher zur Herstellung einer Verpackung, wie in Fig. 2 bis Fig. 5 gezeigt, geeignet ist. Man erkennt insbesondere, dass der Zuschnitt insgesamt eine rechteckige Form hat. Dies bedeutet einen bedeutet einen wesentlichen Kostenvorteil.

Links an die Bodenwand 14 schließt sich entlang der ersten Seitenlinie 14a die Seitenwand 16 an. Entlang der ersten Seitenlinie der Seitenwand 16a schließen sich die Verschlussklappe 18 und daran wiederum die Verschlusslasche 19 an. Rechts an die Bodenwand 14 schließt sich entlang der zweiten Seitenlinie 14b der rechteckige Teil des Zuschnitts an, aus dem die zweite Schutzklappe 30 erzeugt wird. Entlang einer Seitenlinie zwischen den Schutzklappen 30b zwischen schließt sich rechts daran der rechteckige Teil des Zuschnitts an, aus dem die erste Schutzklappe 28 erzeugt wird.

Entlang der Seitenlinie 14b ist eine Schnittlinie vorgesehen, die am zweiten Endbereich beginnt (diesen jedoch ausnimmt) und bis zur ersten Fingeraussparung 34a der zweiten Schutzklappe 30 verläuft. Entlang des ersten Endbereichs ist eine weitere Schnittlinie vorgesehen, die von der ersten Fingeraussparung 34a zur zweiten Fingeraussparung 34b der zweiten Schutzklappe 30 verläuft. Eine weitere Schnittlinie ist entlang der gegenüberliegenden Seitenlinie 30b vorgesehen und verläuft von der zweiten Fingeraussparung 34b zum zweiten Endbereicht nimmt diesen jedoch aus. Diese Schnittlinien begrenzen die zweite Seitenklappe und erlauben es, sie von den angrenzenden Flächen des Faltmaterials zu lösen und hochzuklappen. Die Schnittlinie entlang der Seitenlinie 30b erlaubt auch das Hochklappen der ersten Schutzklappe 28.

Die Schnittlinien, die die Seitenklappen begrenzen, können verbleibende Stege aufweisen, so dass alle Teile es in Fig. 7 dargestellten Zuschnitts fest miteinander verbunden bleiben und so gefaltet werden können. Beim späteren Hochklappen der Seitenklappen werden die Stege dann gebrochen.

Die Fingeraussparungen werden auch durch Schnitte erzeugt, die entsprechenden Abfallstücke werden aber schon vor dem Falten es in Fig. 7 dargestellten Zuschnittes herausgepresst.

Beim Herstellen der Verpackung kann nun der Zuschnitt entlang der zweiten Seitenlinie 14b eingeklappt werden, sodass die (dem Betrachter zugewandte) Oberseite der zweiten Schutzklappe 30 auf der Oberseite der Bodenwand 14 aufliegt. Im ersten Endbereich 20 und im zweiten Endbereich 22 können nun Verklebungen vorgesehen werden. Die im Endbereich somit auf die Bodenwand 14 aufgeklebten Lagen des Faltmaterials bilden dann jeweils die inneren Lagen 40, 44 der Verstärkungsstreifen.

In einem nächsten Herstellungsschritt kann der Teil des Zuschnitts, der im Wesentlichen die erste Schutzklappe 28 zur Verfügung stellen soll, entlang der Seitenlinie zwischen den Schutzklappen 30b umgeklappt und auf die darunter befindliche erste Schutzklappe aufgelegt werden. Im ersten Endbereich 20 und im zweiten Endbereich 22 kann wiederum eine Verklebung vorgenommen werden, sodass in diesen Bereichen nun ein vollständiger erster Verstärkungsstreifen 24 entsteht. Die zweite Schutzklappe 30 lässt sich somit im zweiten Endbereich 22 hochklappen, wird aber im ersten Endbereich 20 an der Bodenplatte gehalten.

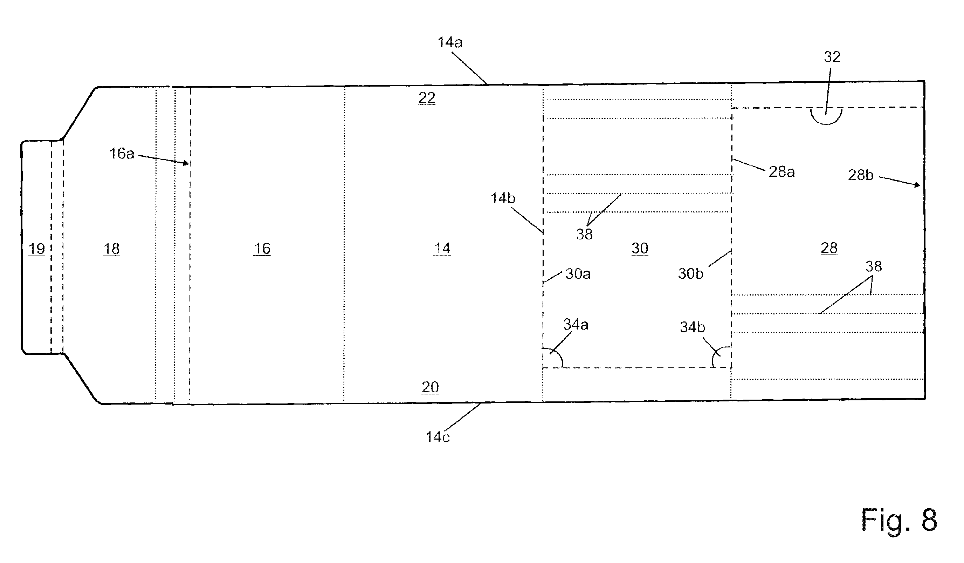

Fig. 8 zeigt einen Zuschnitt aus Faltmaterial in einer Ansicht die Fig. 7 entspricht. Dieser Zuschnitt 12 ist jedoch für eine etwas andere Ausführungsform der Erfindung vorgesehen. In dieser Ausführung reicht die erste Schutzklappe 28 nicht bis zum zweiten Endbereich der Verpackung. Vielmehr ist parallel zur Endkante des Faltmaterials im zweiten Endbereich 22 eine Schnittlinie vorgesehen. Diese Schnittlinie reicht von der ersten Seitenlinie 28a der ersten Schutzklappe zur zweiten Seitenlinie 28b der ersten Schutzklappe. Die Schnittlinie kann so ausgeführt sein, dass eine Fingeraussparung vorgesehen wird. Diese Fingeraussparung kann zusammen mit dem Anbringen der Schnittlinie oder vor dem Anbringen der Schnittlinie ausgestanzt werden. Vorteilhafter Weise weist die Schnittlinie Stege auf, welche die Teile des Zuschnitts vor dem Falten in Position halten.

Die Faltung des Zuschnitts nach Fig. 8 entspricht der Faltung der Faltung nach Fig. 7. Nachdem also die zweite Schutzklappe 30 auf die Bodenwand 14 aufgebracht ist, wird die erste Schutzklappe 28 auf die zweite Schutzklappe 30 aufgebracht. Bei diesem Zuschnitt entsteht aber anders als bei dem Zuschnitt aus Fig. 7 auch im zweiten Endbereich 22 ein zweiter Verstärkungsstreifen 26, der dreilagig ist. Somit ist bei diesem Zuschnitt nicht nur der erste Verstärkungsstreifen 24 dreilagig ausgeführt, sondern auch der zweite Verstärkungsstreifen 26. Wie beim ersten Verstärkungsstreifen 24 ergibt sich auch beim zweiten Verstärkungsstreifen 26 eine Z-Form der Faltung. Bei dieser Z-Form wird von einem Teil der Bodenwand 14 und der inneren Lage 44 des zweiten Verstärkungsstreifens zusammen mit der dann zusätzlichen äußeren Lage des zweiten Verstärkungsstreifens eine Z-Form gebildet. Somit ergeben sich auch entlang der beiden Seitenlinien der Bodenwand jeweils Biegekanten, welche als besonders stabile Stoßfänger dienen könnten.

Aus diesem Verfahren wird ersichtlich, wie sich stabile Verpackung mit z-förmigem Verstärkungsstreifen ökonomisch herstellen lassen.

## Patentansprüche

1. Verpackung (10) aus einem Zuschnitt (12) aus Faltmaterial, die eine Bodenwand (14) aufweist, wobei die Bodenwand (14) durch eine erste Seitenlinie (14a) und eine zweite Seitenlinie (14b) und eine erste Endkante (14c) und eine zweite Endkante (14d) begrenzt wird und an die Bodenwand (14) entlang der ersten Seitenlinie (14a) eine Seitenwand (16) angelenkt ist, wobei an die Seitenwand (16) eine Verschlussklappe (18) angelenkt ist, wobei die Verpackung (10) entlang einer Endkante einen ersten Endbereich (20) aufweist und die Bodenwand (14) im ersten Endbereich (20) einen ersten Verstärkungsstreifen (24) trägt und die Verpackung entlang der anderen Endkante einen zweiten Endbereich aufweist und die Bodenwand (14) im zweiten Endbereich einen zweiten Verstärkungsstreifen (26) trägt und wobei der erste Verstärkungsstreifen (24) aus mindestens einer inneren Lage (42) und einer äußeren Lage (44) des Faltmaterials besteht und wobei der zweite Verstärkungsstreifen (26) aus mindestens einer inneren, der Bodenwand (14) zugewandten, Lage (44) des Faltmaterials besteht, wobei die Verpackung ferner eine erste Schutzklappe (28) und eine zweite Schutzklappe (30) aufweist, so dass ein zu verpackendes Gut auf die Bodenwand (14) gelegt werden kann, durch beide Schutzklappen (28, 30) überdeckt werden kann und die Verpackung (10) durch Umlegen der Seitenwand (16) über die Schutzklappen (28, 30) und Verbinden der Verschlussklappe (18) mit einem Abschnitt einer der Schutzklappen (32, 34) oder einem Abschnitt der Bodenwand (14) verschlossen werden kann, **dadurch gekennzeichnet, dass** die innere Lage (40) und die äußere Lage (42) des ersten Verstärkungsstreifens (24) und eine Teil des Faltmaterials der Bodenwand (14) z-förmig gefaltet sind und sich an die äußere Lage (32) des ersten Verstärkungsstreifens (24) eine erste Schutzklappe (28) anschließt und sich an die innere Lage (44) des zweiten Verstärkungsstreifens (26) eine zweite Schutzklappe (30) anschließt und sich beide Schutzklappen (28;30) im Bereich einer Überlappungsfläche überlappen.

2. Verpackung nach Anspruch 1, bei der die innere Lage (40) des ersten Verstärkungssteifens (24) und/oder die innere Lage (44) des zweiten Verstärkungsstreifens (26) mit einem Teil der Bodenwand (14) verklebt sind.

3. Verpackung, nach einem der Ansprüche 2 oder 3, bei der die innere Lage (40) und die äußere Lage (42) des ersten Verstärkungsstreifens (24) miteinander verklebt sind.

4. Verpackung (10) nach einem der vorherigen Ansprüche, bei der sich die Verstärkungsstreifen (24, 26) im Wesentlichen über die gesamte Länge der Bodenwand (14) zwischen der ersten Seitenlinie (14a) und der zweiten Seitenlinie (14b) erstrecken.

5. Verpackung nach einem der vorhergehenden Ansprüche, bei dem die Verstärkungsstreifen, gemessen in Richtung der Seitenlinien (14a, 14b) der Bodenwand (14) eine Breite von 1 bis 5 cm haben.

6. Verpackung nach einem der vorhergehenden Ansprüche, bei dem die Überlappungsfläche mehr als 50 % der Größe der Fläche der Bodenwand (14) beträgt.

7. Verpackung nach einem der vorhergehenden Ansprüche, bei der mindestens eine Schutzklappe Falzlinien aufweist, die parallel zu den Endkanten (14c, 14d) der Bodenwand (14) verlaufen.

8. Verpackung nach einem der vorhergehenden Ansprüche, bei der in mindestens einer Schutzklappe (28;30) mindestens eine Fingeraussparung (32,34) vorgesehen ist.

9. Verpackung nach einem der vorhergehenden Ansprüche, bei der die Seitenwand (16) einstückig zur Bodenwand ausgebildet ist und mit einer Falzung angelenkt ist.

10. Verpackung nach einem der vorhergehenden Ansprüche, bei der die Verschlussklappe (18) einstückig mit der Seitenwand (16) ausgeführt ist und mit einer Falzung angelenkt ist.

11. Verpackung nach einem der vorhergehenden Ansprüche, bei der die Verschlussklappe 18 oder die Verschlusslasche 19 zum Verschließen der Verpackung ein Klebeband trägt.

12. Verpackung nach einem der vorhergehenden Ansprüche, bei der an den Seitenlinien der Schutzklappen (28,30) Arretierlaschen (46) vorgesehen sind.

13. Verpackung nach einem der vorhergehenden Ansprüche, die so gestaltet ist, dass die Seitenwand als Deckelteil die Schutzklappen (28, 30) überdeckt und das Verschlussteil (18) auf der Rückseite der Bodenwand (14) befestigt werden kann.

14. Verpackung nach einem der vorhergehenden Ansprüche, die so gestaltet ist, dass sich sie aus einem einstückigen Zuschnitt durch Falten und Verkleben herstellbar ist.
